# EUROPEAN PATENT SPECIFICATION

(11) **EP 2 483 085 B1**
(45) Date of publication and mention of the grant of the patent: **28.08.2013**
(21) Application number: 10760994.3
(22) Date of filing: 28.09.2010
(51) Int. Cl.: B60C 1/00, B60C 5/14, B60C 9/14, C08K 5/18, C08L 21/00

(54) **TYRE CONTAINING AN ANTIOXIDANT RESERVOIR**
REIFEN MIT LAGE AUS ALTERUNGSSCHUTZMITTEL
PNEUMATIQUE COMPORTANT UN RESERVOIR D'ANTIOXYDANT

(30) Priority: 30.09.2009 FR 0956776; 17.12.2009 US 287523 P
(43) Date of publication of application: 08.08.2012
(73) Proprietor: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventor: LAVIALLE, David, F-63040 Clermont-Ferrand Cedex 9 (FR); TRAMOND, Philippe, F-63230 Saint Ours Les Roches (FR); BERGER, Eric, F-63410 Loubeyrat (FR); BESSON, Jacques, F-63400 Chamalieres (FR); BIJAOUI, Denis, Khwaeng Samsennai - Khet Phayathai BANGKOK (TH)
(74) Representative: Randl, Oliver Georg
(86) International application number: PCT/EP2010/064350
(87) International publication number: WO 2011/039178

(56) References cited:
- WO-A1-2008/055683
- WO-A1-2009/025044
- FR-A1- 2 854 100
- FR-A1- 2 864 469
- FR-A1- 2 900 156

## Description

### FIELD OF THE INVENTION

The present invention relates to tyres containing an antioxidant reservoir.

### BACKGROUND OF THE INVENTION

Among the factors that may limit the lifetime of a tyre is the internal oxidation of the various components of the tyre, and more particularly the internal oxidation caused by oxygen coming from the gas inflating the tyre.

This is because the essentially unsaturated diene rubber vulcanizates, whether natural or synthetic rubber vulcanizates, are liable to deteriorate relatively rapidly after prolonged exposure to oxygen because of the presence of double bonds in their molecular chains. These complex mechanisms have been discussed, for example, in the documents US 6,344,506 and WO 99/06480**.** They result, after breaking of said double bonds and oxidation of the sulphur bridges, in rigidification and embrittlement of the vulcanizates, which degradation is further accelerated through the concomitant action of heat by undergoing "thermal oxidation" or else through the action of light by undergoing "photo-oxidation".

It has been proposed to limit any oxidation due to oxygen coming from the tyre inflation gas by inflating the tyre with an inert gas, such as nitrogen. However, this solution comes up against the higher cost that it incurs and the difficulty of supplying nitrogen at any site. Faced with these drawbacks, it has therefore been proposed to continue inflating a tyre with air and to provide, inside the tyre, rubber mix portions containing oxygen absorbents. Document WO 2005/097522 describes several ways of implementing this solution.

It has been possible to gradually inhibit the phenomenon of oxidation through the development and commercialization of various antioxidants, including in particular p-phenylenediamine derivatives (PPD or PPDA), such as for example N-isopropyl-N'-phenyl-p-phenylenediamine (I-PPD) or N-1,3-dimethylbutyl-N'-phenyl-p-phenylenediamine (6-PPD), and quinoline derivatives (TMQ), which are both excellent antioxidants and antiozonants (see for example documents US 2004/0129360 and WO2005/063510**).** At the present time, these antioxidants are used systematically in diene rubber compositions, in particular in compositions for tyres, so as to slow down the aging thereof.

A well-known drawback of these antioxidants is the fact that their concentration in rubber compositions naturally decreases over the course of time through their very chemical function. They also have a high natural propensity to migrate from the zones with a higher antioxidant concentration to the zones with a lower antioxidant concentration. Tyre manufacturers are, therefore, forced to use relatively large amounts of product, which is relatively expensive and also detractive to the appearance of the end products because of the high staining power of a large number of antioxidants, especially p-phenylenediamine derivatives.

To alleviate the abovementioned drawbacks and thus further improve the aging protection/resistance of tyres, it has been proposed in particular to incorporate into these tyres additional layers of a rubber mix having a higher antioxidant content, which act as antioxidant reservoirs capable of delivering the antioxidant over the course of time, by migration, according to the degree of depletion in the adjacent zones.

Document US 7,082,976 provides a tread made up of two layers having different antioxidant contents. The radially inner layer has a higher antioxidant content, thereby enabling it to deliver antioxidant into the radially outer layer which is more greatly exposed to the effect of oxygen and, therefore, has a tendency to be more rapidly depleted thereof. This solution has nevertheless the drawback that it is essentially the radially outer portion of the tread that is supplied with antioxidant, whereas other critical zones, such as the shoulders of the tyre, are supplied to only a small extent.

Document WO 2009/029114 also provides one or more antioxidant reservoirs and diffusion barriers in the tread, so as to deliver, in a targeted manner, the antioxidant into at least one shoulder of the tyre. This solution nevertheless requires a complex composite structure of the tread and has a high cost.

### SUMMARY OF THE INVENTION

One of the objectives of the present invention is to provide a tyre that includes antioxidant reservoirs positioned so as, in particular, to protect the axial ends of the crown reinforcement, these being the preferential site for initiating cleavage-type cracking phenomena.

This objective is achieved by a tyre comprising:
two beads intended to come into contact with a mounting rim;
two sidewalls extending the beads radially outwards, the two sidewalls joining in
a crown comprising a crown reinforcement extending axially between two axial ends and surmounted by a tread; and
a carcass reinforcement anchored in the two beads and extending through the sidewalls to the crown,
wherein the crown includes, radially to the inside of the carcass reinforcement, at least one reservoir layer made of a rubber mix having a high antioxidant content, so that at least one reservoir layer is radially plumb with each axial end of the crown reinforcement,
wherein said at least one reservoir layer has an antioxidant content that is equal to or greater than 5 phr but does not exceed 10 phr,
and wherein said at least one reservoir layer further includes an oxygen absorbent.

The disposition of the reservoir layer on the inside of the carcass reinforcement radially plumb with each axial end of the crown reinforcement makes it possible to optimize the use of the antioxidant. In the first place, the antioxidant diffuses toward the axial ends of the crown reinforcement and not toward the axial middle of the tread, where it is less useful. The place chosen for the reservoir layers allows them to have a high loading of antioxidant, since these layers do not play a mechanical role in the operation of the tyre. If the reservoir layers were to be placed radially to the outside of the carcass reinforcement, for example in the tread or around the ends of the crown reinforcement, it would be necessary to limit the antioxidant content so as to obtain rubber mixes capable of fulfilling the mechanical role of the rubber mixes normally used in these zones of the tyre.

The antioxidant content of the reservoir layer does not exceed 10 phr since, at higher contents, the antioxidant content of the adjacent portions of the tyre would increase to the point of impairing their mechanical properties.

As the reservoir layer contains an oxygen absorbent, it constitutes both a physical barrier and a chemical barrier, enabling the oxygen migration to be slowed down and to reduce the deleterious effect thereof.

It should be noted that a tyre according to an embodiment of the invention benefits from a synergy between antioxidant and oxygen absorbent substances, which could not have been obtained if only antioxidants or only oxygen absorbers had been used: the oxygen absorbent traps diffusing oxygen whereas the antioxidant renders it inoffensive. If the reservoir layer contained only oxygen absorbents, the oxygen could still have local effects; if the layer contained only antioxidants, there would be a greater risk that the oxygen did not encounter an antioxidant before it produced its deleterious effect on the rubber mix.

Preferably, the antioxidant of the reservoir layer consists predominantly of a compound chosen from the group formed by N-1,3-dimethylbutyl-N'-phenyl-p-phenylenediamine (6-PPD), N-isopropyl-N'-phenyl-*p*-phenylenediamine (I-PPD), and mixtures of these compounds, since these antioxidants are particularly effective.

As regards the geometry of the reservoir layer, it is preferable for the average radial thickness of said reservoir layer to be equal to or greater than 0.6 mm and preferably equal to or greater than 1 mm. In particular, this makes it easier to position said layer because a smaller average radial thickness would result in a low mechanical strength in the uncured state and make it difficult to position it.

Preferably, the maximum radial thickness of the reservoir layer does not exceed 5 mm, and preferably does not exceed 3 mm. This is because it has been found that, for larger radial thicknesses, the reservoir layer has an unfavourable effect on the operation of the tyre. In particular, an unfavourable thermal effect is observed, due to the fact that the reservoir constitutes an additional source of energy dissipation. As a result, the additional heat-up of the materials of the tyre leads to an increase in their crack rate.

Preferably, the axial width of the reservoir layer is equal to or greater than 20 mm, and preferably equal to or greater than 30 mm. This axial width ensures that the reservoir layer will supply the zone in which the axial end of the crown reinforcement associated therewith lies, since such a width makes it possible to overcome any uncertainty in positioning said layer.

According to an advantageous embodiment, the reservoir layer extends axially from one axial end of the crown reinforcement to the other axial end of the crown reinforcement. Thus, the reservoir layer protects the crown reinforcement over its entire width.

According to another advantageous embodiment, the tyre includes at least two reservoir layers, at least one of said reservoir layers being placed on either side of the median plane of the tyre. In this embodiment, the two axial ends (which are mechanical transition zones much more highly stressed than the centre of the crown) are more effectively protected, while limiting the volume of the reservoir layer and, as a consequence, the total amount of antioxidant and the manufacturing cost of the tyre.

It is therefore particularly advantageous for the axial width of each of the reservoir layers not to exceed 100 mm, and preferably not to exceed 60 mm. This constitutes a very good compromise between the volume of the layers and ease of manufacture.

Ideally, each of said at least two reservoir layers extends axially over at least 15 mm on either side of an axial end of the crown reinforcement. The axial ends of the crown reinforcement are thus protected particularly effectively.

### BRIEF DESCRIPTION OF THE DRAWINGS

Figures 1 and 2 show schematically a tyre according to the prior art.

Figures 3 and 4 show schematically, in radial section, a portion of a reference tyre used for comparative tests against a tyre made according to an embodiment of the invention.

Figures 5 to 9 show schematically, in radial section, a portion of a tyre according to different embodiments of the invention.

### DETAILED DESCRIPTION OF THE DRAWINGS

It is necessary to distinguish between several different uses of the term "radial" by those skilled in the art. In the first place, the expression refers to a radius of the tyre. According to this meaning, a point P1 is said to be "radially internal" to a point P2 (or "radially to the inside" of the point P2) if it is closer to the rotation axis of the tyre than the point P2. Conversely, a point P3 is said to be "radially external" to a point P4 (or "radially to the outside" of the point P4) if it is further away from the rotation axis of the tyre than the point P4. A "radially inward (or outward)" movement refers to a movement in the direction of smaller (or larger) radii. When referring to radial distances, this meaning of the term also applies.

When an element of the tyre is said to be "radially plumb" with a point P1, it should be understood by this that a radial direction passing through this point P1 intersects said element of the tyre and that this intersection lies between the point P1 and the axis of the tyre.

On the other hand, a thread or a reinforcement is said to be "radial" when the thread or the reinforcing elements of the reinforcement makes or make an angle greater than or equal to 80° to the circumferential direction, but said angle not exceeding 90°. It should be pointed out that, in the present document, the term "thread" must be understood in a very general sense and to comprise threads in the form of a monofilament, a multifilament, a cord, a yarn or an equivalent assembly, whatever the constituent material of the thread or the surface treatment to bond it more strongly to the rubber.

Finally, the term "radial section" or "radial cross-section" is understood to mean here a section or cross-section in a plane that contains the rotation axis of the tyre.

An "axial" direction is a direction parallel to the rotation axis of the tyre. A point P5 is said to be "axially internal" to a point P6 (or "axially to the inside" of the point P6) if it is closer to the median plane of the tyre than the point P6. Conversely, a point P7 is said to be "axially external" to a point P8 (or "axially to the outside" of the point P8) if it is further away from the median plane of the tyre than the point P8. The "median plane" of the tyre is the plane which is perpendicular to the rotation axis of the tyre and which lies equidistant from the circumferential reinforcements of each bead.

A "circumferential" direction is a direction perpendicular both to a radius of the tyre and to the axial direction. A "circumferential section" is a section in a plane perpendicular to the rotation axis of the tyre.

The expression "rolling surface" is understood here to mean the set of points on the tread of a tyre that come in contact with the ground when the tyre is rolling.

The expression "rubber mix" denotes a rubber composition comprising at least one elastomer and at least one filler.

For the sake of ease of reading, the same references are used to denote identical structural elements.

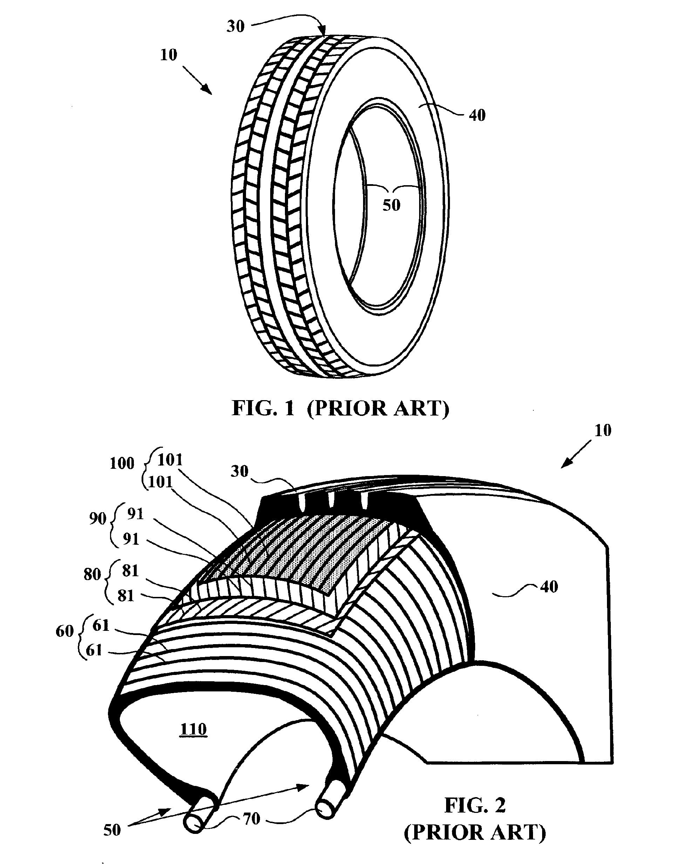

Figure 1 shows schematically a tyre 10 according to the prior art. The tyre 10 comprises two beads 50 intended to come into contact with a mounting rim (not shown), and two sidewalls 40 extending the beads 50 radially outwards, the two sidewalls 40 joining in a crown comprising a crown reinforcement (not visible in Figure 1) that is surmounted by a tread 30.

Figure 2 shows schematically a partial perspective view of a tyre 10 according to the prior art and illustrates the various components of the tyre. Again, the tyre 10 comprises two beads 50 intended to come into contact with a mounting rim (not shown), and two sidewalls 40 extending the beads 50 radially outward, the two sidewalls 40 joining in a crown comprising a crown reinforcement that is surmounted by a tread 30. The crown reinforcement here comprises two plies 80 and 90. Each of the plies 80 and 90 is reinforced by reinforcing threads 81 and 91 that are parallel in each ply and crossed from one ply to the other, making angles of between 10° and 70° with the circumferential direction.

The tyre 10 also includes a carcass reinforcement 60 consisting of threads 61 coated with a rubber mix. The carcass reinforcement 60 is anchored in each of the beads 50 to circumferential reinforcements 70 (here, bead wires) which hold the tyre 10 in position on the rim (not shown).

The tyre further includes a hooping reinforcement 100, placed radially to the outside of the crown reinforcement, this hooping reinforcement being formed from reinforcing elements 101 oriented circumferentially and wound in a spiral.

The tyre 10 shown is a tubeless tyre - it includes an inner liner 110 made of a rubber composition impermeable to the inflation gas and covering the internal surface of the tyre.

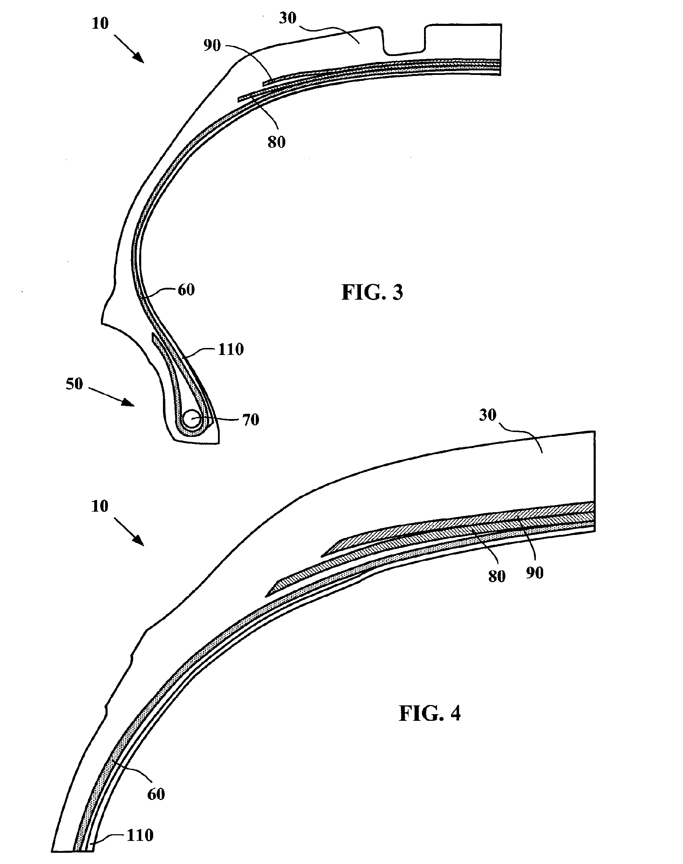

Figures 3 and 4 show schematically, in radial section, a portion of a reference tyre 10.

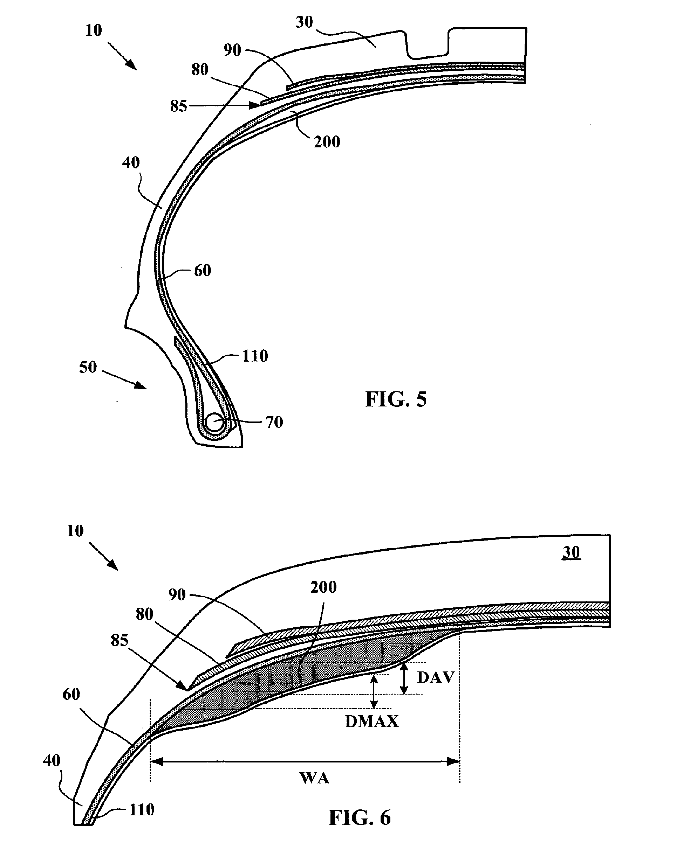

Figure 5 shows, in radial section, a portion of a tyre 10 according to an embodiment of the invention. The tyre 10 comprises two beads 50 intended to come into contact with a mounting rim (not shown), and two sidewalls 40 extending the beads 50 radially outwards, the two sidewalls 40 joining in a crown comprising a crown reinforcement formed from two reinforcing plies or layers 80 and 90. The crown reinforcement extends axially between two axial ends, only one of which, bearing the reference 85, is visible. It is surmounted by a tread 30. The tyre 10 also includes a carcass reinforcement 60 anchored in the two beads 50 and extending through the sidewalls 40 to the crown.

The crown includes, radially to the inside of the carcass reinforcement 60, a reservoir layer 200 made of a rubber mix having a high antioxidant content. The reservoir layer is radially plumb with the axial end 85 of the crown reinforcement. This reservoir layer 200 is made of a rubber mix having an antioxidant content equal to or greater than 5 phr. An example of such a rubber mix is given below.

Figure 6 shows, in radial section, a portion of another tyre 10 according to an embodiment of the invention. Here, the reservoir layer 200 has an average radial thickness DAV equal to 3 mm and a maximum radial thickness DMAX equal to 3.5 mm. The axial width WA of the reservoir layer 200 is equal to 35 mm.

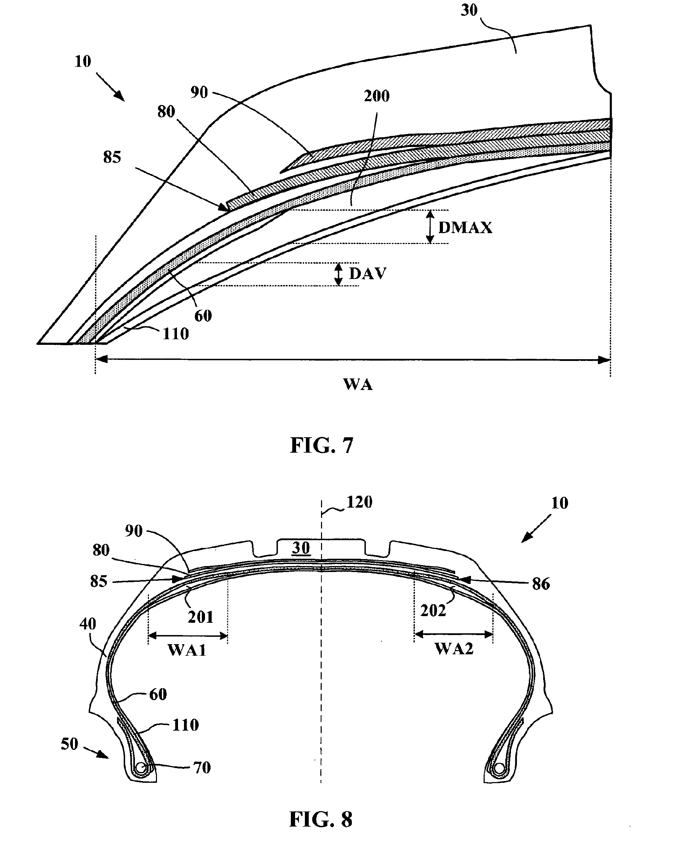

Figure 7 shows, in radial section, a portion of another tyre 10 according to an embodiment of the invention. The reservoir layer 200 is thinner than that of the tyre of Figure 6, but extends further. The average radial thickness DAV is 1.7 mm, the maximum radial thickness DMAX is 2.8 mm and the axial width WA of the reservoir layer 200 is equal to 50 mm.

Figure 8 shows, in radial section, a portion of a tyre 10 according to an embodiment of the invention which is similar to that shown in Figure 5. It may be seen that the tyre 10 has two reservoir layers 201 and 202, one reservoir layer being placed on each side of the median plane 120 of the tyre. In this case, the two reservoir layers have the same axial width WA = WA1 = WA2 = 30 mm. Each of the reservoir layers 200 extends axially by 15 mm on either side of the corresponding axial end 85 or 86 of the crown reinforcement. The reservoir layers 200 are therefore centred axially with respect to an axial end of the crown reinforcement.

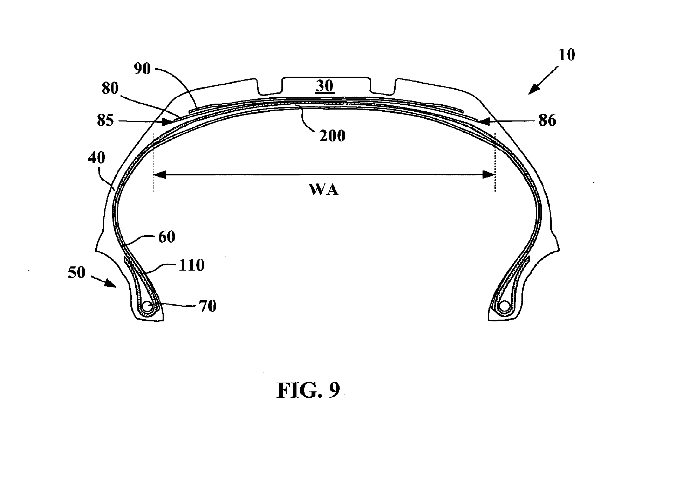

Figure 9 shows, in radial section, a portion of another tyre 10 according to an embodiment of the invention. Unlike the reservoir layers 200 of the tyre shown in Figure 8, the reservoir layer 200 here extends axially from one axial end 85 of the crown reinforcement to the other axial end 86 of the crown reinforcement formed by the plies 80 and 90. The axial width WA is 135 mm.

The formulation and the production of a rubber mix having an antioxidant content equal to or greater than 5 phr but not exceeding 10 phr pose no particular problems to those skilled in the art. Table 1 lists the composition of a rubber mix that can be used. The composition is given in phr (Parts per Hundred Rubber), i.e. in parts by weight per 100 parts of elastomer by weight.

**Table 1**

| Parts in phr | Mix M according to an embodiment of the invention |
|---|---|
| NR [1] | 100 |
| N 683 | 60 |
| Antioxidant (6PPD) [2] | 5 |
| 02 Absorbent [3] | 0.1 |
| Stearic acid | 0.5 |
| ZnO | 3 |
| Sulphur | 3 |
| Accelerator (CBS) [4] | 1.5 |

### Annotations for Table 1:

[1] Natural rubber
[2] N-(1,3-dimethylbutyl)-N'-phenyl-*p*-phenylenediamine
[3] Acac FeIII
[4] N-cyclohexyl-2-benzothiazole sulphenamide.

The rubber mix is preferably based on at least: a diene elastomer, a reinforcing filler and a crosslinking system.

The term "diene" elastomer (or equivalently rubber), is understood to mean, as is known, an elastomer obtained at least in part (i.e. a homopolymer or a copolymer) from diene monomers, i.e. monomers carrying two carbon-carbon double bonds, whether or not these are conjugated. The diene elastomer used is preferably chosen from the group consisting of polybutadienes (BR), natural rubber (NR), synthetic polyisoprenes (IR), butadiene-styrene copolymers (SBR), isoprene-butadiene copolymers (BIR), isoprene-styrene copolymers (SIR), butadiene-styrene-isoprene copolymers (SBIR) and blends of these elastomers.

In a preferred embodiment, an "isoprene" elastomer is used, i.e. an isoprene homopolymer or an isoprene copolymer, in other words a diene elastomer chosen form the group formed by natural rubber (NR), synthetic polyisoprenes (IR), various isoprene copolymers and blends of these elastomers.

The isoprene elastomer is preferably natural rubber or a synthetic polyisoprene of the cis-1,4 type. Among these synthetic polyisoprenes, it is preferred to use polyisoprenes having a content (mol%) of cis-1,4 bonds of greater than 90% and even more preferably greater than 98%. According to other preferred embodiments, the diene elastomer may consist, entirely or partly, of another diene elastomer such as, for example, an SBR (E-SBR or S-SBR) elastomer optionally blended with another elastomer, for example of the BR type.

A rubber mix "according to the invention" (by this is meant a rubber mix that can be used to form the reservoir layer of a tyre according to an embodiment of the invention) has an antioxidant content equal to or greater than 5 phr.

The antioxidant used in the composition of the invention is any antioxidant known to be effective in preventing the aging of rubber vulcanizates that can be attributed to the action of oxygen.

In particular, the following antioxidants may be used: derivatives of *para*-phenylenediamine (abbreviated to PPD or PPDA), or what are known to be called substituted para-phenylenediamines such as, for example, N-1,3-dimethylbutyl-N'-phenyl-p-phenylenediamine (known more by the abbreviation 6-PPD), N-isopropyl-N'-phenyl-p-phenylenediamine (abbreviated to I-PPD), phenylcyclohexyl-*p*-phenylene-diamine, N,N'-di(1,4-dimethylpentyl)-p-phenylenediamine, N,N'-diaryl-p-phenylenediamine (DTPD), diaryl-p-phenylenediamine (DAPD), 2,4,6-tris-(N-1,4-dimethylpentyl-*p-*phenylenediamino)-1,3,5-triazine, and mixtures of such diamines.

It is also possible to use quinoline (TMQ) derivatives such as, for example, 1,2-dihydro-2,2,4-trimethylquinoline and 6-ethoxy-1,2-dihydro-2,2,4-trimethyl-quinoline.

Use may also be made of substituted diphenylamines and triphenylamines, such as those described for example in Patent Applications WO 2007/121936 and WO 2008/055683, in particular 4,4'-bis(isopropylamino)triphenylamine, 4,4'-bis(1,3-dimethylbutylamino)triphenylamine, and 4,4'-bis(1,4-dimethylpentylamino)triphenylamine.

One may also use dialkylthiodipropionates, or phenolic antioxidants especially of the family of 2,2'-methylene-bis-4-(C₁-C₁₀)alkyl-6-(C₁-C₁₂)alkylphenols, such as those described in particular in Patent Application WO 99/02590**.**

Of course, in the present description, the term antioxidant may denote both a single antioxidant compound or a mixture of several antioxidant compounds.

Preferably, the antioxidant is chosen from the group formed by substituted *p-*phenylenediamines, substituted diphenylamines, substituted triphenylamines, quinoline derivatives and mixtures of such compounds. Even more preferably, the antioxidant is chosen from the group formed by substituted p-phenylenediamines and mixtures of such diamines.

The reservoir layer further includes an oxygen absorbent, such as a metal salt. This metal salt is preferably selected from the first series, the second series or the third series of transition metals of the Periodic Table, or from the lanthanides.

The metals may for example be manganese II or III, iron II or III, cobalt II or III, copper I or II, rhodium II, III or IV and ruthenium. The oxidation state of the metal when it is introduced is not necessarily that of the cationic active form. The metal is preferably manganese, nickel or copper, more preferably cobalt and even more preferably iron. The counterion for the metal is particularly chloride, acetate, stearate, palmitate, 2-ethylhexanoate, neodecanoate or naphthenate.

Preferably, the amount of the metal compound in the composition lies within the range from 0.01 to 0.3 phr and even more preferably in the range from 0.05 to 0.15 phr.

The rubber composition may also include some or all of the standard additives conventionally used in rubber matrices intended for the manufacture of tyres, such as, for example reinforcing fillers, such as a carbon black other than the aforementioned carbon black, or inorganic fillers such as silica, coupling agents for coupling inorganic filler, anti-aging agents, plasticizers or extender oils, whether the latter are of aromatic or non-aromatic nature (especially non-aromatic or very slightly aromatic oils, for example of the naphthenic or paraffinic type, having a high, or preferably a low, viscosity, MES or TDAE oils, plasticizing resins having a high T_{g}, namely above 30°C), processing aids making it easier to process the compositions in the uncured state, tackifying resins, a crosslinking system based either on sulphur or on sulphur donors and/or peroxides, accelerators, vulcanization activators or retarders, antireversion agents, methylene acceptors and donors such as, for example, HMT (hexamethylenetetramine) or H3M (hexamethoxymethylmelamine), reinforcing resins (such as resorcinol or bismaleimide), and known adhesion promoters, for example of the metal salt type, especially cobalt, nickel or lanthanide salts.

The compositions are manufactured in suitable mixers, using two successive preparation phases well-known to those skilled in the art, namely a first, thermomechanical working or kneading phase (called the "non-productive" phase) at high temperature, up to a maximum temperature of between 110°C and 190°C, preferably between 130°C and 180°C, followed by a second, mechanical working phase (called the "productive" phase) up to a lower temperature, typically below 110°C, during which finishing phase the crosslinking system is incorporated.

To give an example, the non-productive phase is carried out in a single thermomechanical step lasting a few minutes (for example between 2 and 10 minutes) during which all the necessary basic constituents and other additives, with the exception of the crosslinking or vulcanization system, are introduced into a suitable mixer, such as a standard internal mixer. After the mixture thus obtained has cooled down, the vulcanization system is then incorporated in an external mixer, such as a two-roll mill, maintained at low temperature (for example between 30°C and 100°C). All the ingredients are then mixed (during the productive phase) for a few minutes (for example between 5 and 15 minutes).

The final composition thus obtained is then calendered, for example in the form of a sheet for characterization, or else extruded, to form the outer tread that can be used in a tyre according to an embodiment of the invention.

The vulcanization (or curing) may then be carried out in a known manner, generally at a temperature between 130°C and 200°C, preferably under pressure, for a sufficient time, which may for example vary between 5 and 90 minutes depending in particular on the curing temperature, on the vulcanization system adopted and on the rate of vulcanization of the composition in question.

In order to compare the tyres according to an embodiment of the invention with reference tyres without a reservoir layer having an antioxidant content equal to or greater than 5 phr, endurance tests were carried out. The tyres were mounted on a wheel and inflated to their service pressure. They were then rapidly rotated, under load, on a rolling drum having a surface provided with obstacles (bars and protrusions). The test was stopped as soon as significant deformation of the tyre crown was observed. The following kilometre distances were obtained: 24646 km (reference tyre) and 32576 km (tyre corresponding to Figure 6, having a reservoir layer made of a rubber mix M (see Table 1)). The greater endurance obtained with tyres having a reservoir layer according to an embodiment of the invention was also reflected in a dramatic decrease of cracks that became visible in the tyre shoulders after the test. The reservoir layers therefore make it possible to achieve greater endurance, although they contribute to a significant increase in the operating temperature at the ends of the crown reinforcements.

## Claims

1. Tyre (10) comprising:
two beads (50) intended to come into contact with a mounting rim;
two sidewalls (40) extending the beads radially outwards, the two sidewalls joining in
a crown comprising a crown reinforcement (80, 90) extending axially between two axial ends (85, 86) and surmounted by a tread (30); and
a carcass reinforcement (60) anchored in the two beads and extending through the sidewalls to the crown,
wherein the crown includes, radially to the inside of the carcass reinforcement, at least one reservoir layer (200) made of a rubber mix having a high antioxidant content, so that at least one reservoir layer is radially plumb with each axial end of the crown reinforcement,
wherein said at least one reservoir layer has an antioxidant content that is equal to or greater than 5 phr but does not exceed 10 phr,
and wherein said at least one reservoir layer further includes an oxygen absorbent.

2. Tyre according to Claim 1, wherein the antioxidant of said at least one reservoir layer (200) consists predominantly of a compound chosen from the group formed by N-1,3-dimethylbutyl-N'-phenyl-*p*-phenylenediamine (6-PPD), N-isopropyl-N'-phenyl-p-phenylenediamine (I-PPD), and mixtures of these compounds.

3. Tyre according to any one of Claims 1 or 2, wherein the average radial thickness DAV of said reservoir layer (200) is equal to or greater than 0.6 mm.

4. Tyre according to any one of Claims 1 to 3, wherein the maximum radial thickness DMAX of said reservoir layer (200) does not exceed 5 mm.

5. Tyre according to any one of Claims 1 to 4, wherein the axial width WA of said at least one reservoir layer (200) is equal to or greater than 20 mm.

6. Tyre according to any one of Claims 1 to 5, wherein said at least one reservoir layer (200) extends axially from one axial end of the crown reinforcement to the other axial end of the crown reinforcement.

7. Tyre according to any one of Claims 1 to 5, wherein the tyre includes at least two reservoir layers, at least one of said reservoir layers (200) being placed on either side of the median plane of the tyre.

8. Tyre according to Claim 7, wherein the axial width WA of each of said at least two reservoir layers (200) does not exceed 60 mm.

9. Tyre according to either of Claims 7 or 8, wherein each of said at least two reservoir layers (200) extends axially over at least 15 mm on either side of an axial end of the crown reinforcement.

## Patentansprüche

1. Reifen (10), der Folgendes umfasst:
zwei Wulste (50), die dazu dienen, in Kontakt mit einer Montagefelge zu gelangen;
zwei Seitenwände (40), die die Wulste radial nach außen erstrecken, wobei sich die zwei Seitenwände verbinden in
einem Scheitel, der eine Scheitelverstärkung (80, 90) umfasst, die sich axial zwischen zwei axialen Enden (85, 86) erstreckt und von einer Lauffläche (30) überragt wird; und
eine Karkassenverstärkung (60), die in den zwei Wulsten verankert ist und sich durch die Seitenwände zu dem Scheitel erstreckt,
wobei der Scheitel radial innerhalb der Karkassenverstärkung mindestens eine Lagenschicht (200) enthält, die aus einer Kautschukmischung hergestellt ist, die einen hohen Gehalt an einem Alterungsschutzmittel aufweist, so dass mindestens eine Lagenschicht zu jedem axialen Ende der Scheitelverstärkung radial senkrecht ist,
wobei die mindestens eine Lagenschicht einen Gehalt an einem Alterungsschutzmittel aufweist, der gleich oder größer als 5 phr ist, aber 10 phr nicht übersteigt,
und wobei die mindestens eine Lagenschicht ferner ein Sauerstoffabsorptionsmittel enthält.

2. Reifen nach Anspruch 1, wobei das Alterungsschutzmittel der mindestens einen Lagenschicht (200) vorwiegend aus einer Verbindung besteht, die aus einer Gruppe ausgewählt ist, die aus N-1,3-Dimethylbutyl-N'-Phenyl-*p*-Phenylendiamin (6-PPD), N-Isopropyl-N'-Phenyl-*p-*Phenylendiamin (I-PPD) und aus Mischungen dieser Verbindungen besteht.

3. Reifen nach einem der Ansprüche 1 oder 2, wobei die durchschnittliche radiale Dicke DAV der Lagenschicht (200) gleich oder größer als 0,6 mm ist.

4. Reifen nach einem der Ansprüche 1 bis 3, wobei die maximale radiale Dicke DMAX der Lagenschicht (200) 5 mm nicht übersteigt.

5. Reifen nach einem der Ansprüche 1 bis 4, wobei die axiale Breite WA der mindestens einen Lagenschicht (200) gleich oder größer als 20 mm ist.

6. Reifen nach einem der Ansprüche 1 bis 5, wobei sich die mindestens eine Lagenschicht (200) von einem axialen Ende der Scheitelverstärkung zu dem anderen axialen Ende der Scheitelverstärkung axial erstreckt.

7. Reifen nach einem der Ansprüche 1 bis 5, wobei der Reifen mindestens zwei Lagenschichten enthält, wobei mindestens eine der Lagenschichten (200) auf beiden Seiten der mittleren Ebene des Reifens angeordnet wird.

8. Reifen nach Anspruch 7, wobei die axiale Breite WA jeder der mindestens zwei Lagenschichten (200) 60 mm nicht übersteigt.

9. Reifen nach einem der Ansprüche 7 oder 8, wobei sich jede der mindestens zwei Lagenschichten (200) axial auf beiden Seiten eines axialen Endes der Scheitelverstärkung über mindestens 15 mm erstreckt.

## Revendications

1. Pneumatique (10) comportant:
deux bourrelets (50) destinés à entrer en contact avec une jante de montage ;
deux flancs (40) prolongeant les bourrelets radialement vers l'extérieur, les deux flancs s'unissant dans
un sommet comprenant une armature de sommet (80, 90) s'étendant axialement entre deux extrémités axiales (85, 86) et surmontée d'une bande de roulement (30) ;
une armature de carcasse (60) ancrée dans les deux bourrelets et s'étendant à travers les flancs vers le sommet ;
dans lequel le sommet comporte, radialement à l'intérieur de l'armature de carcasse, au moins une couche de réservoir (200) en mélange caoutchouteux à forte teneur d'agent antioxydant, de sorte qu'au moins une couche de réservoir est à l'aplomb radialement de chaque extrémité axiale de l'armature de sommet,
dans lequel ladite au moins une couche de réservoir a une teneur en agent antioxydant supérieure ou égale à 5 pce et inférieure ou égale à 10 pce,
et dans lequel ladite au moins une couche de réservoir comporte en outre un absorbant d'oxygène.

2. Pneumatique selon la revendication 1, dans lequel l'agent antioxydant de ladite au moins une couche de réservoir (200) consiste majoritairement d'un élément choisi dans le groupe constitué par la N-1,3-diméthylbutyl-N'-phényl-p-phénylènediamine (« 6-PPD »), la N-isopropyl-N'-phényl-p-phénylènediamine (« I-PPD »), et les mélanges de ces composés.

3. Pneumatique selon l'une quelconque des revendications 1 ou 2, dans lequel l'épaisseur radiale moyenne DAV de ladite couche de réservoir (200) est supérieure ou égale à 0.6 mm.

4. Pneumatique selon l'une quelconque des revendications 1 à 3, dans lequel l'épaisseur radiale maximale DMAX de ladite couche de réservoir (200) est inférieure ou égale à 5 mm.

5. Pneumatique selon l'une quelconque des revendications 1 à 4, dans lequel la largeur axiale WA de ladite au moins une couche de réservoir (200) est supérieure ou égale à 20 mm.

6. Pneumatique selon l'une quelconque des revendications 1 à 5, dans lequel ladite au moins une couche de réservoir (200) s'étend axialement d'une extrémité axiale de l'armature de sommet à l'autre extrémité axiale de l'armature de sommet.

7. Pneumatique selon l'une quelconque des revendications 1 à 5, dans lequel le pneumatique comporte au moins deux couches de réservoir, au moins une desdites couches de réservoir (200) étant disposée de part et d'autre du plan médian du pneumatique.

8. Pneumatique selon la revendication 7, dans lequel la largeur axiale WA de chacune desdites au moins deux couches de réservoir (200) est inférieure ou égale à 60 mm.

9. Pneumatique selon l'une quelconque des revendications 7 ou 8, dans lequel chacune desdites au moins deux couches de réservoir (200) s'étend axialement sur au moins 15 mm de part et d'autre d'une extrémité axiale de l'armature de sommet.
